(19) Europäisches Patentamt
European Patent Office
Office européen des brevets

(11) **EP 3 412 875 A2**

(12) **EUROPÄISCHE PATENTANMELDUNG**

(43) Veröffentlichungstag:
**12.12.2018   Patentblatt 2018/50**

(51) Int Cl.:
***F01D 11/12*** *(2006.01)*

(21) Anmeldenummer: **18174496.2**

(22) Anmeldetag: **28.05.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **08.06.2017   DE 102017209658**

(71) Anmelder: **MTU Aero Engines AG
80995 München (DE)**

(72) Erfinder:
• **Jakimov, Andreas
  85777 Fahrenzhausen (DE)**
• **Schlothauer, Steffen
  85253 Erdweg (DE)**
• **Lorenz, Beatrice
  80809 München (DE)**

(54) **EINLAUFSTRUKTUR FÜR EINE STRÖMUNGSMASCHINE UND VERFAHREN ZUM HERSTELLEN EINER EINLAUFSTRUKTUR**

(57)    Die Erfindung betrifft eine Einlaufstruktur (10) für eine Strömungsmaschine (40), welche dazu ausgebildet ist, beim Betrieb der Strömungsmaschine (40) durch wenigstens ein Einlaufelement (44, 47) der Strömungsmaschine (40) zumindest teilweise verformt und/oder zumindest teilweise abgetragen zu werden, wobei die wenigstens eine Einlaufstruktur (10) zumindest bereichsweise aus Strukturelementen (12, 14, 16, 18) gebildet ist, welche einen jeweiligen, in einer Anstreifrichtung (X_A) der Einlaufstruktur (10) ausgerichteten Polygonquerschnitt (20, 22) aufweisen. Die Strukturelemente (12, 14, 16, 18) weisen in der Anstreifrichtung ($X\_A$) eine größere Erstreckung ($X_h$, $X_r$) auf, als in einer, zu der Anstreifrichtung ($X\_A$) senkrechten Richtung der Einlaufstruktur (10). Weitere Aspekte der Erfindung betreffen eine Strömungsmaschine (40) mit einer Einlaufstruktur (10) sowie ein Verfahren zum Herstellen einer Einlaufstruktur (10).

Fig.2b

EP 3 412 875 A2

**Beschreibung**

Die Erfindung betrifft eine Einlaufstruktur für eine Strömungsmaschine, welche dazu ausgebildet ist, beim Betrieb der Strömungsmaschine durch wenigstens ein Einlaufelement der Strömungsmaschine zumindest teilweise verformt und/oder zumindest teilweise abgetragen zu werden, wobei die wenigstens eine Einlaufstruktur zumindest bereichsweise aus Strukturelementen gebildet ist, welche einen jeweiligen, in einer Anstreifrichtung der Einlaufstruktur ausgerichteten Polygonquerschnitt aufweisen. Weitere Aspekte der Erfindung betreffen eine Strömungsmaschine mit einer Einlaufstruktur sowie ein Verfahren zum Herstellen einer Einlaufstruktur.

Derartige Einlaufstrukturen kommen beispielsweise als statorseitige Einlaufbeläge an Laufschaufeln eines Hochdruckverdichters zur Anwendung. Einlaufstrukturen werden in Strömungsmaschinen häufig eingesetzt, wenn eine Berührung von Schaufelspitzen oder Dichtfins der Strömungsmaschine und einer metallischen Oberfläche, beispielsweise im Bereich eines Gehäuses der Strömungsmaschine oder einer Welle unvermeidbar, gewünscht oder bei bestimmten Betriebszuständen wahrscheinlich ist. Durch die Einlaufstruktur kann ein Spaltverhalten der Strömungsmaschine verbessert werden, wobei beispielsweise eine Berührung zwischen Rotor und Stator der Strömungsmaschine notwendig sein kann, um besonders enge Spalte zur Effizienzsteigerung der Strömungsmaschine zu realisieren. Wenn sich beispielsweise der Rotor der Strömungsmaschine während des Betriebs stärker ausdehnt als das Gehäuse der Strömungsmaschine, so kann dies zu einer Berührung von Schaufelspitzen des Rotors und der beispielsweise am Gehäuse angeordneten Einlaufstruktur führen. Bei dieser Berührung kann dann dementsprechend der zwischen der Schaufelspitze und der Einlaufstruktur vorhandene radiale Spalt auf den Wert "0" sinken. Um beispielsweise den Rotor vor Beschädigungen zu schützen, weist die Einlaufstruktur eine - im Vergleich zu dem Rotor - geringe Festigkeit auf, sodass die Schaufelspitzen beim Betrieb der Strömungsmaschine ohne großen Widerstand in die Einlaufstruktur "einlaufen" können.

Bei Tribologiesystemen, bei welchen es beispielsweise zu einer Berührung zwischen einer Leitschaufel und dem Rotor der Strömungsmaschine kommen kann, können eine oder mehrere Einlaufstrukturen verwendet werden, um ein Anstreifen zwischen Leitschaufelspitze und dem Rotor ohne Beschädigung des Rotors zu ermöglichen. Die Einlaufstrukturen können dann an dem Rotor aufgenommen sein, wobei es zu dem Anstreifen der Leitschaufelspitze an der Einlaufstruktur während des Betriebs der Strömungsmaschine kommen kann.

Zu den häufigsten Anwendungsfällen von als Turbinen ausgestalteten Strömungsmaschinen zählt eine Kombination von als Honigwabendichtung ausgebildeten Einlaufstrukturen mit Laufschaufeln, deren Spitzen mit Deckband und Dichtstegen (welche auch als "Fins" bezeichnet werden können) versehen sind. Das Deckband verbessert dabei die Abdichtung durch Minimierung des Spalts an den Schaufelspitzen, wobei die Fins in die Honigwabendichtung einlaufen können. Die Dichtfins sind häufig auch an den Rotorscheiben direkt angeordnet. Die Rotorscheiben umfassen dazu im Wesentlichen in Strömungsrichtung oder entgegen der Strömungsrichtung erstreckende Arme bzw. Innenbänder, auf denen die Dichtfins stromaufwärts und/oder stromabwärts angeordnet sind und mit entsprechenden statorseitigen Einlaufstrukturen zusammenwirken.

Aufgabe der vorliegenden Erfindung ist es, eine Einlaufstruktur für eine Strömungsmaschine zu schaffen, welche ein günstiges Anstreifverhalten sowie ein günstiges Dichtverhalten aufweist. Weitere Aufgaben der Erfindung bestehen darin, eine Strömungsmaschine mit einer derartigen Einlaufstruktur sowie ein Verfahren zum Herstellen einer solchen Einlaufstruktur zu schaffen.

Diese Aufgaben werden erfindungsgemäß durch eine Einlaufstruktur mit den Merkmalen des Patentanspruchs 1, eine Strömungsmaschine mit den Merkmalen des Patentanspruchs 10 sowie durch ein Verfahren mit den Merkmalen des Patentanspruchs 11 gelöst. Vorteilhafte Ausgestaltungen mit zweckmäßigen Weiterbildungen der Erfindung sind in den Unteransprüchen angegeben, wobei vorteilhafte Ausgestaltungen der Einlaufstruktur als vorteilhafte Ausgestaltungen der Strömungsmaschine und des Verfahrens anzusehen sind.

Ein erster Aspekt der Erfindung betrifft eine Einlaufstruktur für eine Strömungsmaschine, welche dazu ausgebildet ist, beim Betrieb der Strömungsmaschine durch wenigstens ein Einlaufelement der Strömungsmaschine zumindest teilweise verformt und/oder zumindest teilweise abgetragen zu werden, wobei die wenigstens eine Einlaufstruktur zumindest bereichsweise aus Strukturelementen gebildet ist, welche einen jeweiligen, in einer Anstreifrichtung der Einlaufstruktur ausgerichteten Polygonquerschnitt aufweisen. Die Strukturelemente können als einzelne Hohlstrukturen ausgebildet sein und eine durch den Polygonquerschnitt begrenzte Strukturelementöffnung aufweisen. Die Strukturelemente können auch zueinander verschiedene Polygonquerschnitte und dementsprechend verschiedene Vieleckkonturen aufweisen. Unter der Anstreifrichtung kann eine Richtung einer relativen Schaufelbewegung wenigstens eines Einlaufelements der Strömungsmaschine zu der Einlaufstruktur zu verstehen sein. Dementsprechend kann unter der Anstreifrichtung beispielsweise eine Richtung einer Bewegung einer Schaufelspitze, beispielsweise eines Rotors der Strömungsmaschine, oder eines Dichtfin relativ zu der Einlaufstruktur während des Betriebs der Strömungsmaschine zu verstehen sein. Ist die Einlaufstruktur in der Strömungsmaschine eingesetzt, so kann die Anstreifrichtung in Umfangsrichtung eines Gehäuses der Strömungsmaschine oder in Umfangsrichtung eines Rotors der Strömungsmaschine orientiert sein. Die Einlaufstruktur kann dementsprechend bereichsweise eine Krümmung in der Umfangsrichtung aufweisen, sodass sich beim Betrieb der Strömungsmaschine ein Spalt zwischen jeweiligen Schaufelspitzen und der Einlaufstruktur einstellen kann. Verkleinert sich der Spalt beispielsweise aufgrund von betriebsbedingten Längenänderungen (beispielsweise aufgrund von Wärmedehnung der Schaufelelemente beim Betrieb der Strömungsmaschine) so kann es zum Kontakt zwischen Schaufelspitzen und einer Strukturoberfläche der Einlaufstruktur kommen. Infolgedessen kann die Einlaufstruktur im Bereich der Strukturoberfläche zumindest teilweise verformt und zusätzlich oder alternativ zumindest teilweise abgetragen werden.

Gemäß der Erfindung ist vorgesehen, dass die Strukturelemente in der Anstreifrichtung eine größere Erstreckung aufweisen, als in einer, zu der Anstreifrichtung senkrechten Richtung der Einlaufstruktur. Die Strukturelemente können somit in der Anstreifrichtung eine Streckung im Vergleich zu der, zu der Anstreifrichtung senkrechten Richtung der Einlaufstruktur aufweisen. Durch die Streckung kann eine Querschnittsfläche des Polygonquerschnitts im Vergleich zum ungestreckten Polygonquerschnitt verringert sein, zumal durch die Streckung die Erstreckung in der senkrechten Richtung gegenüber dem ungestreckten Polygonquerschnitt verkleinert sein kann. Diese Querschnittsfläche entspricht auch einer Leckagefläche, wobei das Dichtverhalten der einzelnen Strukturelemente und damit der gesamten Einlaufstruktur umso besser ist, je kleiner die Leckagefläche ist. Mit anderen Worten sinken jeweilige Spaltverluste bzw. Strömungsverluste beim Betrieb der Strömungsmaschine, wenn die Leckagefläche und damit die Querschnittsfläche der Polygonquerschnitte verkleinert wird.

Die größere Erstreckung der Strukturelemente in der Anstreifrichtung als in der zu der Anstreifrichtung senkrechten Richtung der Einlaufstruktur bewirkt auch ein verbessertes Anstreifverhalten. Grund hierfür ist, dass durch die Streckung in der Anstreifrichtung ein Anteil an Wandflächen eines jeweiligen Strukturelements im Verhältnis zur Summe aus den Wandflächen und der durch den Polygonquerschnitt begrenzenden Innenfläche mit zunehmender Streckung geringer wird. Mit anderen Worten sinkt also mit zunehmender Streckung in der Anstreifrichtung der Anteil der Wandflächen im Polygonquerschnitt im Vergleich zur Innenfläche, welche durch den Polygonquerschnitt begrenzt ist. Die Innenfläche kann einer Öffnungsfläche der Strukturelementöffnung entsprechen. Insgesamt kann hierdurch eine Anstreiffläche, an welcher das Einlaufelement bei einem Einlaufvorgang die Einlaufstruktur berühren kann, durch die Streckung der Strukturelemente verringert werden, sodass dem Einlaufelement beim Anstreifen bzw. Einlaufen ein geringer Widerstand durch die jeweiligen Strukturelemente entgegengesetzt und damit das Anstreifverhalten verbessert ist.

Der Polygonquerschnitt kann vorzugsweise als unregelmäßiger Polygonquerschnitt ausgebildet sein.

Unregelmäßig ist ein Polygonquerschnitt dann, wenn dieser voneinander verschiedene, also verschieden große Innenwinkel aufweist. Durch einen solchen unregelmäßigen Polygonquerschnitt lässt sich besonders einfach die größere Erstreckung in der Anstreifrichtung als in der dazu senkrechten Richtung realisieren. Vorzugsweise kann der unregelmäßige Polygonquerschnitt in der Anstreifrichtung gestreckt sein. Hierbei kann der unregelmäßige Polygonquerschnitt symmetrisch zu einer durch die Anstreifrichtung verlaufenden Symmetrieebene sein, oder symmetrisch zu einer, zu dieser Symmetrieebene parallelen Ebene sein. Dadurch ist eine besonders gleichmäßige Belastung des Strukturelements bei einem etwaigen Einlaufen (Einlaufvorgang) oder Anlaufen (Anlaufvorgang) ermöglicht. Die Anstreifrichtung kann - entsprechend einer Drehbewegung des Einlaufelements beim Betrieb der Strömungsmaschine - kreissegmentförmig und damit gebogen verlaufen, wodurch die Symmetrieebene dann eindeutig durch deren Verlauf durch die Anstreifrichtung definiert ist.

In einer vorteilhaften Weiterbildung der Erfindung weisen die Strukturelemente an zumindest einem jeweiligen Strukturelementende in der Anstreifrichtung zusammenlaufende und einen spitzen Innenwinkel einschließende Strukturelementwände auf. Dies ist von Vorteil, da durch den spitzen Innenwinkel eine besonders gute Krafteinleitung in der Anstreifrichtung in die jeweiligen Strukturelemente ermöglicht ist, wobei durch das Zusammenlaufen der Strukturelementwände in dem spitzen Innenwinkel ein etwaiges Umklappen der Strukturelementwände infolge von bei dem Anstreifen auf die Strukturelemente wirkenden Kräften wirksam unterbunden werden kann. Durch ein derartiges Umklappen kann es zu erhöhten Undichtigkeiten und damit zu einem, sich beim Betrieb der Strömungsmaschine verschlechternden Dichtverhalten kommen.

In einer weiteren vorteilhaften Weiterbildung der Erfindung entspricht der spitze Innenwinkel einem Winkel zwischen 10° und 80°, bevorzugt zwischen 30° und 60° und besonders bevorzugt zwischen 38° und 55°. Unter einem Winkel zwischen 10° und 80° werden im Rahmen der Erfindungswinkel von 10,0°, 10,5°, 11,0°, 11,5°, 12,0°, 12,5°, 13,0°, 13,5°, 14,0°, 14,5°, 15,0°, 15,5°, 16,0°, 16,5°, 17,0°, 17,5°, 18,0°, 18,5°, 19,0°, 19,5°, 20,0°, 20,5°, 21,0°, 21,5°, 22,0°, 22,5°, 23,0°, 23,5°, 24,0°, 24,5°, 25,0°, 25,5°, 26,0°, 26,5°, 27,0°, 27,5°, 28,0°, 28,5°, 29,0°, 29,5°, 30,0°, 30,5°, 31,0°, 31,5°, 32,0°, 32,5°, 33,0°, 33,5°, 34,0°, 34,5°, 35,0°, 35,5°, 36,0°, 36,5°, 37,0°, 37,5°, 38,0°, 38,5°, 39,0°, 39,5°, 40,0°, 40,5°, 41,0°, 41,5°, 42,0°, 42,5°, 43,0°, 43,5°, 44,0°, 44,5°, 45,0°, 45,5°, 46,0°, 46,5°, 47,0°, 47,5°, 48,0°, 48,5°, 49,0°, 49,5°, 50,0°, 50,5°, 51,0°, 51,5°, 52,0°, 52,5°, 53,0°, 53,5°, 54,0°, 54,5°, 55,0°, 55,5°, 56,0°, 56,5°, 57,0°, 57,5°, 58,0°, 58,5°, 59,0°, 59,5°, 60,0°, 60,5°, 61,0°, 61,5°, 62,0°, 62,5°, 63,0°, 63,5°, 64,0°, 64,5°, 65,0°, 65,5°, 66,0°, 66,5°, 67,0°, 67,5°, 68,0°, 68,5°, 69,0°, 69,5°, 70,0°, 70,5°, 71,0°, 71,5°, 72,0°, 72,5°, 73,0°, 73,5°, 74,0°, 74,5°, 75,0°, 75,5°, 76,0°, 76,5°, 77,0°, 77,5°, 78,0°, 78,5°, 79,0°, 79,5°, 80,0°, verstanden. Diese Winkel ermöglichen eine besonders freie Auswahl des jeweiligen Polygonquerschnitts der Strukturelemente. Ein besonders günstiges Anstreifverhalten und Dichtverhalten kann beispielsweise bei einem Winkel zwischen 38° und 55° erreicht werden. So sind beispielsweise bei einem Innenwinkel von 40° oder bei einem Innenwinkel von 53° besonders gute Werte für das Anstreifverhalten und das Dichtverhalten zu erzielen.

In einer weiteren vorteilhaften Weiterbildung der Erfindung weisen die Strukturelemente wenigstens zwei entlang der Anstreifrichtung ausgerichtete, voneinander beabstandete Elementwände auf. Dies ist von Vorteil, da eine Streckung der Strukturelemente durch Verlängerung der jeweiligen Elementwände besonders einfach ermöglicht ist, wobei gleichzeitig die durch den Polygonquerschnitt begrenzte Innenfläche der Strukturelemente im Vergleich zu einer Vergrößerung der Wandfläche der Elementwände deutlich stärker ansteigt, wodurch das Anstreifverhalten besonders günstig beeinflusst werden kann.

In einer weiteren vorteilhaften Weiterbildung der Erfindung weist zumindest ein Strukturelement der Einlaufstruktur einen Hexagonquerschnitt oder einen Rautenquerschnitt auf. Mit anderen Worten kann also der jeweilige Polygonquerschnitt als Hexagonquerschnitt oder als Rautenquerschnitt ausgebildet sein. Ein derartiger Hexagonquerschnitt bzw. Rautenquerschnitt ermöglicht eine besonders regelmäßige Anordnung der Strukturelemente der Einlaufstruktur. Dadurch kann eine besonders gleichmäßige Dichtwirkung über der gesamten Einlaufstruktur erzielt werden. Weisen zumindest einige der Strukturelemente den Rautenquerschnitt auf, so bestehen besonders viele Freiheitsgrade bei einer Anordnung der einzelnen Strukturelemente zueinander und/oder aneinander. Weisen zumindest einige der Strukturelemente den Hexagonquerschnitt auf, so ist eine besonders sanfte Umlenkung von bei einem Anstreifvorgang wirkenden Anstreifkräften in jeweilige, aneinander anschließende Elementwände bzw. Wandbereiche des jeweiligen Strukturelements ermöglicht.

In einer weiteren vorteilhaften Weiterbildung der Erfindung bilden aneinander angrenzende Strukturelemente wenigstens eine gemeinsame Wand aus. Die gemeinsame Wand kann dabei die jeweiligen Polygonquerschnitt der aneinander angrenzenden Strukturelemente zumindest bereichsweise begrenzen. Die gemeinsame Wand kann auch einem Wandteilbereich einer Strukturelementwand der jeweiligen aneinander angrenzenden Strukturelemente entsprechen. Das Ausbilden der gemeinsamen Wand ist von Vorteil, da hierdurch im Vergleich zu aus dem Stand der Technik bekannten Strukturen, bei welchen jeweilige Wabenwände voneinander getrennt ausgebildet sind, insgesamt Gewicht eingespart werden kann.

In einer weiteren vorteilhaften Weiterbildung der Erfindung überlappen sich die aneinander angrenzenden Strukturelemente an der gemeinsamen Wand. Dies ist von Vorteil, da durch das Überlappen eine besonders kompakte und gegenüber mechanischen Belastungen steife Anordnung der Strukturelemente ermöglicht ist. Bei einem derartigen Überlappen kann die gemeinsame Wand einem Wandteilbereich einer Strukturelementwand bzw. einer Elementwand der jeweiligen, aneinander angrenzenden Strukturelemente entsprechen.

In einer weiteren vorteilhaften Weiterbildung der Erfindung weist die Einlaufstruktur zumindest ein Trägerelement auf, mittels welchem die Einlaufstruktur an der Strömungsmaschine festlegbar ist. Dies ist von Vorteil, da das Trägerelement ein besonders sicheres Festlegen der Einlaufstruktur an der Strömungsmaschine ermöglicht. Das Trägerelement kann beispielsweise als Hohlzylinderschalenteil ausgebildet sein, an welchem die Strukturelemente angeordnet und verbunden sein können.

In einer weiteren vorteilhaften Weiterbildung ist die Einlaufstruktur einteilig ausgebildet. Dies ist von besonderem Vorteil, da beispielsweise jeweils benachbarte, also aneinander angrenzende Strukturelemente miteinander hergestellt und dabei verbunden sein können. Dadurch kann ein aus dem Stand der Technik bekanntes, aufwändiges Verbinden der einzelnen Strukturelemente, beispielsweise durch Löten, entfallen.

Ein zweiter Aspekt der Erfindung betrifft eine Strömungsmaschine mit einer Einlaufstruktur gemäß dem ersten Erfindungsaspekt. Die sich hieraus ergebenden Merkmale und deren Vorteile gehen aus der Beschreibung des ersten Erfindungsaspekts hervor. Vorteilhafte Ausgestaltungen des ersten Erfindungsaspekts sind dabei als vorteilhafte Ausgestaltungen des zweiten Erfindungsaspekts und umgekehrt anzusehen.

Ein dritter Aspekt der Erfindung betrifft ein Verfahren zum Herstellen einer Einlaufstruktur. Gemäß der Erfindung wird die Einlaufstruktur durch ein additives Herstellverfahren, insbesondere durch selektives Laserschmelzen, hergestellt. Dies ist von Vorteil, da durch derartige additive Herstellverfahren eine einteilige Herstellung der Einlaufstruktur und damit eine Reduzierung der Fertigungszeit im Vergleich zu aus dem Stand der Technik bekannten, mehrteiligen Strukturen, ermöglicht ist. Eine Herstellung durch selektives Laserschmelzen (Selective Laser Melting) ermöglicht zudem eine besonders große Gestaltungsfreiheit bei der Herstellung beispielsweise der einzelnen Strukturelemente. Insbesondere können dadurch aneinander angrenzende Strukturelemente mit gemeinsamen Wänden hergestellt werden.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separate Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:

Fig. 1a eine Schnittdarstellung eines Teilbereichs einer Strömungsmaschine, wobei eine Einlaufstruktur an einem Gehäuse der Strömungsmaschine aufgenommen ist, um ein Einlaufen einer als Einlaufelement dienenden Schaufelspitze eines Schaufelelements in die Einlaufstruktur zu ermöglichen;

Fig. 1b eine Schnittdarstellung eines Teilbereichs der Strömungsmaschine, wobei die Einlaufstruktur an einem Rotor aufgenommen ist, um ein Anlaufen des als Einlaufelement dienenden Schaufelelements an der Einlaufstruktur zu ermöglichen;

Fig. 1c eine Schnittdarstellung eines Teilbereichs der Strömungsmaschine, wobei die Einlaufstruktur an einem Stator aufgenommen ist, um ein Anlaufen von als Einlaufelementen dienenden Dichtfins an der Einlaufstruktur zu ermöglichen;

Fig. 2a eine Draufsicht auf zwei Strukturelemente der Einlaufstruktur, wobei die Strukturelemente einen Hexagonquerschnitt aufweisen;

Fig. 2b eine Draufsicht auf einen Teilbereich der Einlaufstruktur mit mehreren, nebeneinander angeordneten Strukturelementen, welche den Hexagonquerschnitt aufweisen;

Fig. 3a eine Draufsicht auf ein weiteres Strukturelement der Einlaufstruktur, wobei das weitere Strukturelement einen Rautenquerschnitt aufweist; und

Fig. 3b eine Draufsicht auf eine Anordnung mehrerer Strukturelemente, welche den Rautenquerschnitt aufweisen.

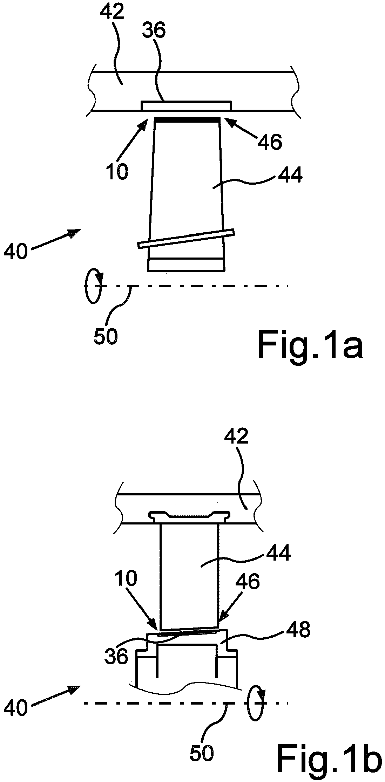

Fig. 1a und Fig. 1b zeigen jeweils eine Schnittdarstellung eines Teilbereichs einer Strömungsmaschine 40, wobei die Strömungsmaschine 40 beispielsweise als Triebwerk ausgestaltet sein kann. In Fig. 1a ist eine Einlaufstruktur 10 an einem Gehäuse 42 angeordnet, wohingegen die Einlaufstruktur 10 in Fig. 1b an einem Rotor 48 der Strömungsmaschine 40 angeordnet ist. Die Einlaufstruktur 10 ist vorliegend einteilig ausgebildet und weist ein Trägerelement 36 auf, mittels welchem die Einlaufstruktur 10 an der Strömungsmaschine 40, also an dem Gehäuse 42 (Fig. 1a) bzw. an dem Rotor 48 (Fig. 1b) festgelegt ist.

Die Strömungsmaschine 40 weist mehrere Schaufelelemente auf, von welchen in den Fig. 1a und Fig. 1b ein Schaufelelement 44 mit einer Schaufelspitze 46 dargestellt ist. In Fig. 1a ist das Schaufelelement 44 als Rotorschaufel ausgebildet, wohingegen das Schaufelelement 44 in Fig. 1b als Leitschaufel ausgebildet ist. Beim Betrieb der Strömungsmaschine 40 rotiert das in Fig. 1a als Rotorschaufel ausgebildete Schaufelelement 44 um eine Rotationsachse 50, wobei die Einlaufstruktur 10 ein Einlaufen und damit ein Anstreifen der Schaufelspitze 46 an der Einlaufstruktur 10, bzw. an einer der Schaufelspitze 46 zugewandten Strukturoberfläche der Einlaufstruktur 10 ermöglicht. In Fig. 1b ermöglicht die Einlaufstruktur 10 ein Anstreifen in Form eines Anlaufens zwischen der Schaufelspitze 46 und der, der Schaufelspitze 46 zugewandten Strukturoberfläche der Einlaufstruktur 10. Das Anstreifen kann also in Form eines Einlaufens, wie in Fig. 1a gezeigt, oder in Form eines Anlaufens, wie in Fig. 1b gezeigt erfolgen, je nachdem ob die Einlaufstruktur 10 an dem Gehäuse 42 oder an dem Rotor 48 aufgenommen ist. Die Einlaufstruktur 10 kann somit allgemein ein Anstreifen in Form des in Fig. 1a gezeigten Einlaufens sowie ein Anstreifen in Form des in Fig. 1b gezeigten Anlaufens ermöglichen.

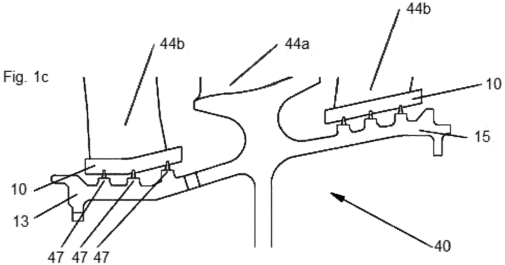

Fig. 1c zeigt eine weitere Schnittdarstellung durch eine Strömungsmaschine 40. In dieser Ansicht ist ein Innenband 13, 15 des Rotors gezeigt, an dem stromaufwärts einer Rotorschaufel 44a und stromabwärts der Rotorschaufel 44a als Einlaufelemente ausgebildete Dichtfins 47 angeordnet sind, die mit einem Einlaufbelag 10 der stromaufwärts vorangehenden und stromabwärts angeordneten Stator 44b zusammen eine Dichtung bilden. Die Dichtfins 47 laufen dabei in den Einlaufbelag 10 ein, wenn sich der Rotor aufgrund von Fliehkräften oder hohen Temperaturen ausdehnt. Es kann auch vorgesehen sein, dass die Dichtfins 47 bei einem Anlaufen der Strömungsmaschine in die Einlaufstruktur 10 einlaufen. Dies kann im Betriebszustand der Strömungsmaschine 40 vorteilhaft eine Leckage verringern oder verhindern.

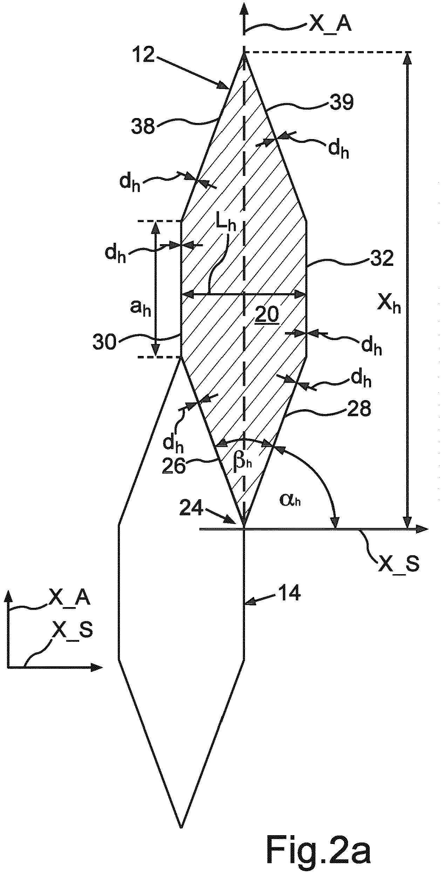

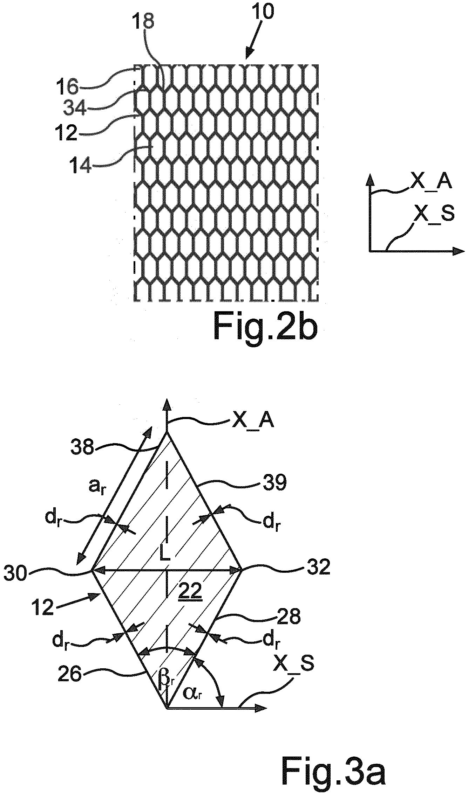

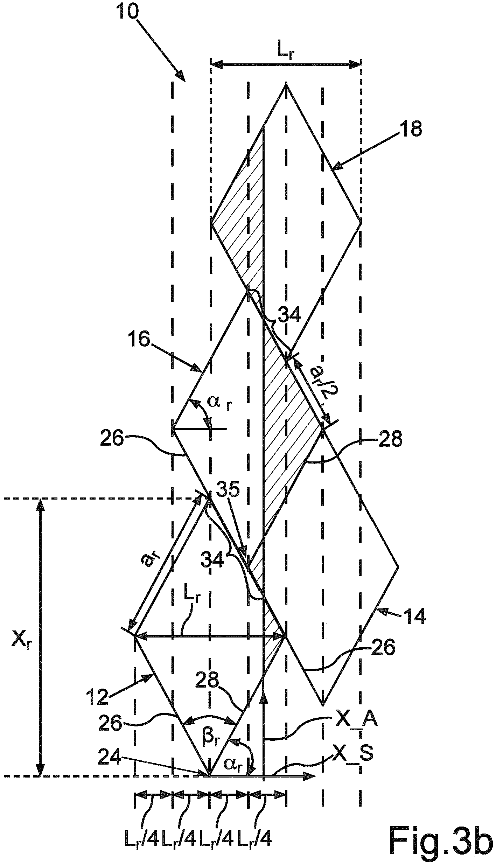

Die Einlaufstruktur 10 ist dazu ausgebildet, beim Betrieb der Strömungsmaschine 40 durch das jeweilige Schaufelelement 44 bei einem zwischen dem Schaufelelement 44 bzw. der Schaufelspitze 46 und der Einlaufstruktur 10 durchgeführten Anstreifvorgang zumindest teilweise verformt und zusätzlich oder alternativ zumindest teilweise abgetragen zu werden. Die Einlaufstruktur 10 kann hierbei aus Strukturelementen 12, 14, 16, 18 gebildet sein, welche nebeneinander angeordnet sein können und miteinander die Strukturoberfläche als Anstreifbelag bilden können. Beim Betrieb der Strömungsmaschine 40 können zumindest einige der Strukturelemente 12, 14, 16, 18 verformt und zusätzlich oder alternativ abgetragen werden, um einen Spalt zwischen der Schaufelspitze 46 und der Einlaufstruktur 10 möglichst gering zu halten und dementsprechend die Strömungsmaschine 40 mit einem hohen Wirkungsgrad betreiben zu können. Aus der Zusammenschau der Fig. 2a, Fig. 2b, Fig. 3a und Fig. 3b ist erkennbar, dass die Strukturelemente 12, 14, 16, 18 einen jeweiligen, in einer Anstreifrichtung X_A der Einlaufstruktur 10 ausgerichteten Polygonquerschnitt 20, 22 aufweisen können. Der Anstreifvorgang zwischen der Einlaufstruktur 10 und der Schaufelspitze 46 kann hierbei in der Anstreifrichtung X_A erfolgen, wobei die Anstreifrichtung X_A in Fig. 2a bis Fig. 3b durch einen Pfeil verdeutlicht ist. Der Polygonquerschnitt 20 ist vorliegend als Hexagonquerschnitt ausgebildet, wohingegen der Polygonquerschnitt 22 als Rautenquerschnitt ausgebildet ist. Zumindest einige Strukturelemente 12, 14, 16, 18 der Einlaufstruktur 10 können somit einen Hexagonquerschnitt oder einen Rautenquerschnitt aufweisen. Die in Fig. 2a bzw. Fig. 2b gezeigten Strukturelemente 12, 14, 16, 18 weisen hierbei den Hexagonquerschnitt auf, wohingegen die in Fig. 3a und Fig. 3b gezeigten Strukturelemente 12, 14, 16, 18 den Rautenquerschnitt aufweisen. Der Hexagonquerschnitt ist vorzugsweise als "Mischform" aus Honigwabengeometrie und Rautengeometrie ausgebildet, wie insbesondere in Fig. 2a erkennbar ist.

Die Polygonquerschnitte 20, 22 sind vorzugsweise als unregelmäßige Polygonquerschnitte ausgebildet. Mit anderen Worten weisen die Polygonquerschnitte 20, 22 eine unregelmäßige Polygonkontur auf, wie vorliegend gezeigt ist.

Um eine besonders günstige Anstreifrichtung zu erhalten sowie ein günstiges Dichtverhalten beim Betrieb der Strömungsmaschine 40 zu erzielen, weisen die Strukturelemente 12, 14, 16, 18 in der Anstreifrichtung X_A eine größere Erstreckung $X_h$, $X_r$ auf, als in einer, zu der Anstreifrichtung X_A senkrechten Richtung X_S der Einlaufstruktur 10. Die senkrechte Richtung X_S ist in Fig. 2a bis Fig. 3b ebenfalls durch einen Pfeil dargestellt, welcher senkrecht zu der Anstreifrichtung X_A orientiert ist.

Im Rahmen der vorliegenden Beschreibung wird mit dem Index "h" eine auf den Hexagonquerschnitt (siehe Fig. 2a und Fig. 2b) bezogene Größe bezeichnet, wohingegen mit dem Index "r" eine auf den Rautenquerschnitt (siehe Fig. 3a und Fig. 3b) bezogene Größe bezeichnet wird. Die Erstreckung $X_h$ steht dementsprechend beispielsweise für die Erstreckung der den Hexagonquerschnitt aufweisenden Strukturelemente in der Anstreifrichtung X_A, wohingegen die Erstreckung $X_r$ für die Erstreckung der den Rautenquerschnitt aufweisenden Strukturelemente 12, 14, 16, 18 in der Anstreifrichtung X_A steht.

Die Strukturelemente 12, 14, 16, 18 weisen an zumindest einem jeweiligen Strukturelementende 24 in der Anstreifrichtung X_A zusammenlaufende und einen jeweiligen spitzen Innenwinkel $\beta_h$, $\beta_r$ einschließende jeweilige Strukturelementwände 26, 28 auf. Der jeweilige spitze Innenwinkel $\beta_h$, $\beta_r$ kann dabei einem Winkel zwischen 10° und 80°, bevorzugt zwischen 30° und 60° und besonders bevorzugt zwischen 38° und 55° entsprechen. Insbesondere bei einem Winkel zwischen 38° und 55° lässt sich ein besonders gutes Anstreifverhalten sowie ein besonders günstiges Dichtverhalten der Einlaufstruktur 10 erreichen.

Die Strukturelemente 12, 14, 16, 18 können wenigstens zwei entlang der Anstreifrichtung X_A ausgerichtete, voneinander beabstandete Elementwände 30, 32 aufweisen. Die Elementwand 30 kann, wie in Fig. 2a gezeigt ist, unmittelbar an die Strukturelementwand 26 anschließend mit dieser verbunden sein, wohingegen die Elementwand 32 unmittelbar an die Strukturelementwand 28 an diese anschließend mit dieser verbunden sein kann. Die voneinander beabstandeten Elementwände 30, 32 können - im Falle des in Fig. 2a gezeigten Strukturelements 12 mit dem Polygonquerschnitt 20 (Hexagonquerschnitt) eine Erstreckung in der Anstreifrichtung X_A mit einer Seitenlänge $a_h$ aufweisen. Die Elementwände 30, 32 können im Falle des in Fig. 3a gezeigten Strukturelements 12 mit dem Polygonquerschnitt 22 (Rautenquerschnitt) als Verbindungswandstücke ausgebildet sein. Die Elementwand 30 ist einerseits mit der Strukturelementwand 26 und andererseits mit einem Wandteil 38 verbunden. Die Elementwand 32 ist einerseits mit der Strukturelementwand 28 und andererseits mit einem Wandteil 39 verbunden. Insgesamt begrenzen die Strukturelementwände 26, 28, sowie die Elementwände 30, 32 und die Wandteile 38, 39 den jeweiligen Polygonquerschnitt 20, 22 der jeweiligen Strukturelemente 12, 14, 16, 18.

Fig. 2b und Fig. 3b zeigen, das aneinander angrenzende Strukturelemente 12, 14, 16 wenigstens eine gemeinsame Wand 34 ausbilden können. Die aneinander angrenzenden Strukturelemente 12, 14, 16 überlappen sich dabei an der gemeinsamen Wand 34 beispielsweise in der zu der Anstreifrichtung X_A senkrechten Richtung X_S. Durch dieses Überlappen entsteht ein Versatz im in Fig. 3b gezeigten Anordnungsmuster der Strukturelemente 12, 14, 16, 18 sodass an einem Knotenpunkt 35 insgesamt lediglich drei Strukturelementwände 26, 28 bzw. Elementwände 30, 32 der Strukturelemente 12, 14, 16 aufeinandertreffen. Im Vergleich zu aus dem Stand der Technik bekannten Strukturen, bei welchen vier Strukturwände an einem Ende beispielsweise einer Honigwabenstruktur aufeinandertreffen, kann durch das hier vorliegende Aufeinandertreffen der drei Strukturelementwände 26, 28 bzw. Elementwände 30, 32 ein verbessertes Anstreifverhalten erzielt werden, da weniger Material der Strukturelemente 12, 14, 16 an dem Knotenpunkt 35 angehäuft ist und dementsprechend ein Anstreifen in der Anstreifrichtung X_A mit einem geringeren Reibungswiderstand ermöglicht ist, als bei aus dem Stand der Technik bekannten Strukturen.

In Fig. 2a sind als jeweilige Größen des Strukturelements 12 eine Seitenlänge $a_h$, eine Wandstegbreite $d_h$, ein Überhangwinkel $\alpha_h$, eine Erstreckung $X_h$ des Hexagonquerschnitts entlang der Anstreifrichtung X_A und eine Quererstreckung $L_h$ entlang der senkrechten Richtung X_S dargestellt. In Fig. 3A sind als jeweilige Größen des den Rautenquerschnitt aufweisenden Strukturelements 12 eine Seitenlänge $a_r$, eine Wandstegbreite $d_r$, ein Überhangwinkel $\alpha_r$, eine Erstreckung $X_r$ des Rautenquerschnitt entlang der Anstreifrichtung X_A sowie eine Quererstreckung $L_r$ entlang der senkrechten Richtung X_S dargestellt. Die Quererstreckung $L_h$, $L_r$ stellt vorliegend eine Zellbreite der jeweiligen Strukturelemente 12, 14, 16, 18 dar.

Der jeweilige Überhangwinkel $\alpha_h$, $\alpha_r$ beschreibt eine Neigung der jeweiligen Strukturelementwand 28 gegenüber der senkrechten Richtung X_S. Vorliegend können folgende Winkelbeziehungen für die jeweiligen Winkel $\alpha_h$, $\alpha_r$ und $\beta_h$, $\beta_r$ gelten:

$$2\alpha_h + \beta_h = 180°$$

$$2\alpha_r + \beta_r = 180°$$

Besonders günstige Werte für das Anstreifverhalten und das Dichtverhalten ergeben sich für die Strukturelemente 12, 14 mit dem Polygonquerschnitt 20, wenn folgende Größenwerte vorliegen:

$$\alpha_h = 70°; \beta_h = 40°; L_h/a_h = 0{,}868.$$

Das Anstreifverhalten und das Dichtverhalten sind auch bei geometrisch ähnlichen Strukturelementen entsprechend gut. Die Quererstreckung $L_h$ kann also beispielsweise $L_h = 0{,}868$ mm oder - bei geometrisch ähnlichen Formen - einem Vielfachen davon entsprechen. Gleiches gilt für die Seitenlänge $a_h$, welche beispielsweise einem Wert von $a_h = 1$ mm entsprechen kann.

Allgemein lassen sich Dichtwirkung und Anstreifverhalten mit steigendem Überhangwinkel $\alpha_h$, $\alpha_r$ (und damit kleinerem Innenwinkel $\beta_h$, $\beta_f$) verbessern. Eine Verringerung der Seitenlänge $a_h$, $a_r$ ermöglicht allgemein die Dichtwirkung, da sich hierdurch besonders kleine Leckageflächen ergeben. Eine Vergrößerung der Seitenlänge $a_h$, $a_r$ verbessert das Anstreifverhalten.

Ein besonders gutes Anstreifverhalten und Dichtverhalten kann für die Strukturelemente 12, 14, 16, 18 mit dem Rautenquerschnitt (Polygonquerschnitt 22) erzielt werden, wenn folgende Größenwerte vorgesehen werden:

$$\alpha_r = 63{,}5°; \beta_r = 53°; L_r/a_r = 0{,}894.$$

Zusammenfassend ist mit der vorliegenden Erfindung eine Einlaufstruktur 10 mit Strukturelementen 12, 14, 16, 18 beschrieben, welche hinsichtlich ihrer Geometrie (Polygonquerschnitt 20, 22) dahingehend optimiert sind, dass ein besonders günstiges Anstreifverhalten sowie ein besonders günstiges Dichtverhalten beim Betrieb der Strömungsmaschine 40 mit der Einlaufstruktur 10 oder mehreren derartigen Einlaufstrukturen erzielt werden kann. Die jeweiligen Strukturelemente 12, 14, 16, 18 können eine, im Vergleich zu aus dem Stand der Technik bekannten Wabenstrukturen, dickere Wandstärke (Wandstegbreite $d_h$, $d_r$) aufweisen und sind dementsprechend besonders zur Herstellung im Rahmen eines additiven Herstellverfahrens, beispielsweise durch selektives Laserschmelzen geeignet. Durch die im Vergleich zu aus dem Stand der Technik bekannten Wabenstrukturen engen Wabenstegabstände (Quererstreckung $L_h$, $L_r$) kann eine besonders günstige Dichtwirkung also ein besonders günstiges Dichtverhalten erzielt werden. Durch die Streckung der Strukturelemente 12, 14, 16, 18 in der Anstreifrichtung X_A können auch Wandstegbreiten $d_h$, $d_r$ mit Werten von $d_h \geq 130$ $\mu$m bzw. $d_r \geq 130$ $\mu$m hergestellt werden, ohne dass das Anstreifverhalten im Vergleich zu aus dem Stand der Technik bekannten Wabenstrukturen verschlechtert wird. Die Herstellung mittels additiven Herstellverfahren ermöglicht eine einteilige Herstellung der gesamten Einlaufstruktur 10, also beispielsweise eine einteilige Herstellung der Strukturelemente 12, 14, 16, 18 und des Trägerelements 36, mittels welchem die Einlaufstruktur 10 an der Strömungsmaschine 40 festgelegt sein kann. Durch das einteilige Ausbilden der Einlaufstruktur 10 können Einsparungen hinsichtlich der Fertigungszeit sowie der Herstellkosten der Einlaufstruktur 10 erzielt werden. Als Werkstoff für die Einlaufstruktur 10 kann beispielsweise Inconel 718 verwendet werden. Dieser Werkstoff kann zunächst pulverförmig bereitgestellt werden und durch das additive Herstellverfahren zu der Einlaufstruktur 10 verbunden werden.

Bezugszeichenliste:

| 10 | Einlaufstruktur |
|----|-----------------|
| 12 | Strukturelement |
| 13 | Stromaufwärtiges Innenband |
| 14 | Strukturelement |
| 15 | Stromabwärtiges Innenband |
| 16 | Strukturelement |
| 18 | Strukturelement |
| 20 | Polygonquerschnitt |
| 22 | Polygonquerschnitt |
| 24 | Strukturelementende |
| 26 | Strukturelementwand |
| 28 | Strukturelementwand |
| 30 | Elementwand |
| 32 | Elementwand |
| 34 | gemeinsame Wand |
| 35 | Knotenpunkt |
| 36 | Trägerelement |
| 38 | Wandteil |
| 39 | Wandteil |
| 40 | Strömungsmaschine |

| | |
|---|---|
| 42 | Gehäuse |
| 44 | Einlaufelement; Schaufelelement |
| 44a | Rotorschaufel bzw. Laufschaufel |
| 44b | Statorschaufel bzw. Leitschaufel |
| 46 | Schaufelspitze |
| 47 | Dichtfin |
| 48 | Rotor |
| 50 | Rotationsachse |
| $a_h$ | Seitenlänge |
| $a_r$ | Seitenlänge |
| $d_h$ | Wandstegbreite |
| $d_r$ | Wandstegbreite |
| $\alpha_h$ | Überhangwinkel |
| $\alpha_r$ | Überhangwinkel |
| $\beta_h$ | spitzer Innenwinkel |
| $\beta_r$ | spitzer Innenwinkel |

**Patentansprüche**

1. Einlaufstruktur (10) für eine Strömungsmaschine (40), welche dazu ausgebildet ist, beim Betrieb der Strömungsmaschine (40) durch wenigstens ein Einlaufelement (44) der Strömungsmaschine (40) zumindest teilweise verformt und/oder zumindest teilweise abgetragen zu werden, wobei die wenigstens eine Einlaufstruktur (10) zumindest bereichsweise aus Strukturelementen (12, 14, 16, 18) gebildet ist, welche einen jeweiligen, in einer Anstreifrichtung (X_A) der Einlaufstruktur (10) ausgerichteten Polygonquerschnitt (20, 22) aufweisen, **dadurch gekennzeichnet, dass** die Strukturelemente (12, 14, 16, 18) in der Anstreifrichtung (X_A) eine größere Erstreckung ($X_h$, $X_r$) aufweisen, als in einer, zu der Anstreifrichtung (X_A) senkrechten Richtung (X_S) der Einlaufstruktur (10).

2. Einlaufstruktur (10) nach Anspruch 1, **dadurch gekennzeichnet, dass** die Strukturelemente (12, 14, 16, 18) an zumindest einem jeweiligen Strukturelementende (24) in der Anstreifrichtung (X_A) zusammenlaufende und einen spitzen Innenwinkel ($\beta_h$, $\beta_r$) einschließende Strukturelementwände (26, 28) aufweisen.

3. Einlaufstruktur (10) nach Anspruch 2, **dadurch gekennzeichnet, dass** der spitze Innenwinkel ($\beta_h$, $\beta_f$) einem Winkel zwischen 10° und 80°, bevorzugt zwischen 30° und 60° und besonders bevorzugt zwischen 38° und 55° entspricht.

4. Einlaufstruktur (10) nach einem der vorhergehenden Ansprüche, **dadurch gekennzeichnet, dass** die Strukturelemente (12, 14, 16, 18) wenigstens zwei entlang der Anstreifrichtung (X_A) ausgerichtete, voneinander beabstandete Elementwände (30, 32) aufweisen.

5. Einlaufstruktur (10) nach einem der vorhergehenden Ansprüche, **dadurch gekennzeichnet, dass** zumindest ein Strukturelement (12, 14, 16, 18) der Einlaufstruktur (10) einen Hexagonquerschnitt (20) oder einen Rautenquerschnitt (22) aufweist.

6. Einlaufstruktur (10) nach einem der vorhergehenden Ansprüche, **dadurch gekennzeichnet, dass** aneinander angrenzende Strukturelemente (12, 14, 16) wenigstens eine gemeinsame Wand (34) ausbilden.

7. Einlaufstruktur (10) nach Anspruch 6, **dadurch gekennzeichnet, dass** sich die aneinander angrenzenden Strukturelemente (12, 14, 16) an der gemeinsamen Wand (34) überlappen.

8. Einlaufstruktur (10) nach einem der vorhergehenden Ansprüche, **dadurch gekennzeichnet, dass** die Einlaufstruktur (10) zumindest ein Trägerelement (36) aufweist, mittels welchem die Einlaufstruktur (10) an der Strömungsmaschine (40) festlegbar ist.

9. Einlaufstruktur (10) nach einem der vorhergehenden Ansprüche, **dadurch gekennzeichnet, dass** die Einlaufstruktur (10) einteilig ausgebildet ist.

10. Strömungsmaschine (40) mit einer Einlaufstruktur (10) nach einem der Ansprüche 1 bis 9.

11. Verfahren zum Herstellen einer Einlaufstruktur (10) nach einem der Ansprüche 1 bis 9, **dadurch gekennzeichnet, dass** die Einlaufstruktur (10) durch ein additives Herstellverfahren, insbesondere durch selektives Laserschmelzen, hergestellt wird.

Fig.1a

Fig.1b

Fig. 1c

Fig.2a

Fig.2b

Fig.3a

Fig.3b